# FASCICULE DE BREVET EUROPEEN

(11) **EP 3 194 253 B1**
(45) Date de publication et mention de la délivrance du brevet: **23.01.2019**
(21) Numéro de dépôt: 15766488.9
(22) Date de dépôt: 18.09.2015
(51) Int. Cl.: B62D 29/04, B62D 25/20, B62D 29/00, B60R 13/08, B62D 65/02

(54) **PROCÉDÉ DE FABRICATION D'UN VÉHICULE ET VÉHICULE COMPORTANT UN PLANCHER COMPOSITE**
VERFAHREN ZUR HERSTELLUNG EINES FAHRZEUGS UND FAHRZEUG MIT EINEM VERBUNDBODEN
METHOD FOR THE PRODUCTION OF A VEHICLE AND VEHICLE COMPRISING A COMPOSITE FLOOR

(30) Priorité: 18.09.2014 FR 1458842
(43) Date de publication de la demande: 26.07.2017
(73) Titulaire: Flex-N-Gate France, 25405 Audincourt (FR); Renault s.a.s, 92100 Boulogne-Billancourt (FR)
(72) Inventeur: JAUNASSE, Philippe, F-75015 Paris (FR); GUYON, Cyrille, F-25600 Nommay (FR)
(74) Mandataire: Lavoix
(86) Numéro de dépôt international: PCT/EP2015/071503
(87) Numéro de publication internationale: WO 2016/042153

(56) Documents cités:
- WO-A1-2005/113321
- WO-A1-2013/183359
- DE-A1- 4 412 427
- FR-A1- 2 912 108
- US-A1- 2010 078 927

## Description

L'invention concerne en général les planchers de véhicules.

Plus précisément, l'invention concerne selon un aspect un procédé de fabrication d'un véhicule, du type comprenant :
- un plancher supérieur en un matériau composite en une ou plusieurs parties ;
- un plancher inférieur en un matériau composite en une ou plusieurs parties, s'étendant au regard d'au moins une partie du plancher supérieur, les planchers inférieur et supérieur étant liés l'un à l'autre le long d'au moins une ligne de fixation et délimitant entre eux au moins un corps creux.

On connaît des planchers de ce type par exemple par FR 2 912 108. Ce document décrit un procédé de fabrication d'un véhicule selon le préambule de la revendication 1. De tels planchers sont légers, mais ne sont pas entièrement satisfaisants du point de vue de l'insonorisation.

Dans ce contexte, l'invention vise à proposer un plancher présentant des performances d'insonorisation améliorées.
Cet objet est obtenu selon l'invention à l'aide d'un procédé de fabrication d'un véhicule selon la revendication 1, et d'un véhicule obtenu selon ledit procédé, selon la revendication 12

A cette fin, l'invention porte sur un plancher du type précité, caractérisé en ce que le plancher comprend entre le plancher supérieur et le plancher inférieur, à l'intérieur du corps creux, au moins une couche d'isolant phonique et une lame d'air superposée à la couche d'insonorisant.

L'intégration d'une couche d'insonorisant et d'une lame d'air entre les planchers supérieur et inférieur permet d'améliorer de manière très sensible l'insonorisation procurée par le plancher, et ce sans augmenter l'encombrement dans l'habitacle véhicule. En effet, pour des raisons de rigidité, les planchers inférieur et supérieur ne sont pas plaqués l'un contre l'autre, mais au contraire sont écartés l'un de l'autre de manière à délimiter entre eux un ou plusieurs corps creux. Ces corps creux améliorent la rigidité du plancher. Il est avantageux de profiter de l'espace disponible dans le corps creux pour loger la couche d'insonorisant et la lame d'air.

Pour la transmission des bruits et des vibrations, le plancher se comporte comme un double vitrage. Ses performances d'insonorisation sont donc très bonnes.

L'utilisation d'une structure composite présente notamment par rapport à un plancher classique en acier une diminution de la masse surfacique (défavorable à la prestation acoustique en loi de masse) et une augmentation de la raideur du sous-ensemble (ce qui engendre une augmentation du facteur de rayonnement du plancher particulièrement critique en hautes fréquences).

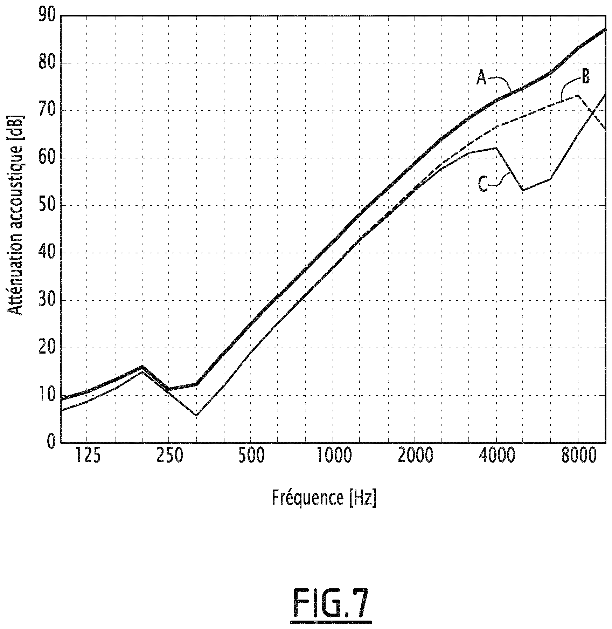

Ces phénomènes sont illustrés sur la figure 7 qui représente l'atténuation acoustique en fonction de la fréquence. La courbe A, qui offre la meilleure prestation, représente un plancher classique en acier, recouvert d'une couche d'insonorisation et d'un tapis. Elle se trouve dégradée en une courbe B lorsqu'on diminue le poids du plancher de 40% et une courbe C si en plus la raideur du plancher est augmentée de 40%, ce qui correspond à un plancher composite.

Pour compenser ces deux phénomènes et retrouver le niveau des performances acoustiques de planchers classiques en acier, une solution connue consisterait à poser sur ce type de plancher composite un ensemble tapis/insonorisant d'un poids important, si bien que globalement la solution plancher composite avec tapis/insonorisant amènerait à un poids proche voire supérieur à la solution de plancher classique.

La solution proposée dans l'invention au contraire permet d'atteindre de bonnes performances acoustiques en mettant en oeuvre des poids faibles d'insonorisant. En effet la couche d'insonorisant et la lame d'air intégrées entre les deux planchers composites permettent de découpler mécaniquement les planchers inférieur et supérieur afin de minimiser les transferts solidiens via le plancher ainsi que le rayonnement, tant en moyennes qu'en hautes fréquences. L'ajout d'un tapis/insonorisant de poids faible au-dessus du plancher supérieur complète l'insonorisation et permet ainsi d'atteindre des performances supérieures aux solutions connues utilisant un plancher en acier. Le poids de l'ensemble reste néanmoins bien en deçà du poids de la solution classique.

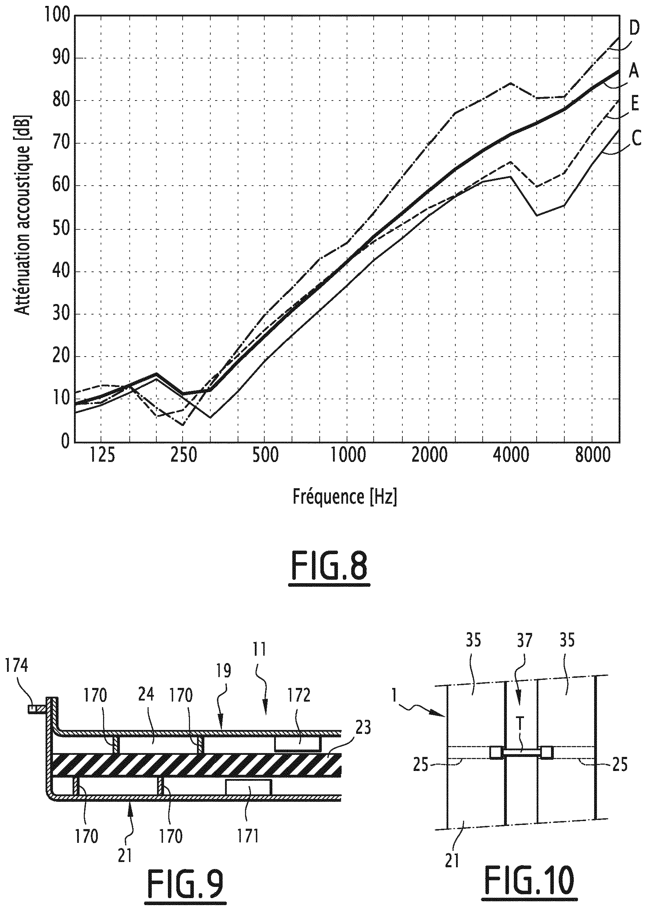

La figure 8 illustre l'intérêt de cette solution. Les performances d'un plancher composite avec couche d'insonorisant et lame d'air entre le plancher inférieur et le plancher supérieur, plus un tapis insonorisant sur le plancher supérieur, sont représentées par la courbe D, que l'on peut comparer à la courbe A (solution classique avec plancher en acier et tapis insonorisant), à la courbe C (structure identique à celle de la courbe A, avec un plancher composite à la place du plancher en acier), et à la courbe E (structure identique à celle de la courbe C, avec une couche d'insonorisant plus épaisse.

Le plancher supérieur est typiquement tourné vers l'intérieur de l'habitacle du véhicule. Au contraire, le plancher inférieur est normalement tourné vers la surface de roulement du véhicule.

Le matériau composite formant le plancher supérieur comprend des fibres longues, par exemple des fibres de verre et/ou des fibres de carbone et/ou des fibres d'aramide et/ou des fibres végétales. En variante, il comprend des fibres courtes. Les fibres sont agencées sous forme de textiles tissés, non tissés unidirectionnels ou encore de non tissés à fibres longues coupées.

Ces fibres sont noyées dans une résine thermoplastique, adaptée pour être mise en forme par thermo-estampage avec des temps de cycle courts, de l'ordre de la minute. Le thermo-estampage est un procédé d'estampage à chaud. La résine est par exemple une résine à base de polyamide, ou de polypropylène. Dans une variante non préférée, les fibres sont noyées dans une résine thermo-dure ou vitrimère, par exemple une résine à base de polyester ou époxy, ...

Le plancher supérieur présente typiquement une épaisseur comprise entre 1 et 6 mm.

Le matériau composite du plancher inférieur est par exemple identique au matériau composite du plancher supérieur. En variante, il est différent. Il comporte lui aussi des fibres longues, par exemple des fibres de verre et/ou des fibres de carbone et/ou des fibres d'aramide et/ou des fibres végétales. En variante il comporte des fibres courtes. Les fibres sont agencées sous forme de textiles tissés, non tissés unidirectionnels ou encore de non tissés à fibres longues coupées.

Ces fibres sont noyées dans une résine thermoplastique, adaptée pour être mise en forme par thermo-estampage avec des temps de cycle courts, de l'ordre de la minute. Le thermo-estampage est un procédé d'estampage à chaud. La résine est par exemple une résine à base de polyamide, ou de polypropylène. Dans une variante non préférée, les fibres sont noyées dans une résine thermo-dure et/ou vitrimère, par exemple à base polyester ou époxy, ...

Le plancher inférieur présente typiquement une épaisseur comprise entre 1 et 6 mm.

Le plancher inférieur s'étend en regard de la plus grande partie du plancher supérieur. Par exemple, il s'étend en regard d'au moins 50% de la surface du plancher supérieur.

En variante les planchers inférieur et/ou supérieur ne sont pas mis en forme par thermoestampage mais par tout autre procédé adapté, en fonction de la nature des matériaux et de la forme à obtenir.

Selon une autre variante, le plancher comporte des éléments surmoulés sur les planchers inférieur et/ou supérieur, permettant d'intégrer des fonctions supplémentaires sur les planchers inférieur et/ou supérieur. Ces éléments sont par exemple des nervures de rigidification, des goulottes de passage de câbles, des logements destinés à loger des équipements divers (calculateurs, connecteurs ...), des clips destinés à la fixation du plancher sur le véhicule. Ces éléments sont en une matière comportant typiquement une résine thermoplastique et des fibres courtes noyées dans la résine. La résine est de préférence la même que celle formant les planchers inférieur et/ou supérieur.

Le plancher comprend typiquement une seule couche d'insonorisant inséré dans les corps creux formés par lesdits planchers. En variante, il comporte plusieurs couches d'insonorisant, disposées les unes sur les autres.

L'insonorisant est de tout type adapté :
- une mousse (par ex polyuréthane ou polyester)
- un feutre à base de fibres cellulosiques ou d'une matière fibreuse présentant de meilleures caractéristiques de tenue en température (polyester ou polyamide).

Le choix d'une matière fibreuse ou d'une mousse devra se faire en fonction des objectifs en amortissement que l'ensemble insonorisant devra apporter à la solution composite.

Si des besoins accrus en prestation acoustique s'avèrent nécessaires, la solution d'insonorisation intégrée combine deux couches de feutres de résistivités différentes (couramment appelée biperméable), une couche de mousse et une couche de feutre, ou encore une couche ressort (mousse ou feutre) et un septum (masse lourde). La masse lourde est généralement à base d'un thermoplastique contenant des polyoléfines ou des EVA (Ethyle Vinyle Acétate) et des charges minérales.

La couche d'insonorisant couvre de préférence au moins 50% de la surface du plancher inférieur.

Selon une variante avantageuse, l'insonorisant est une mousse coulée ou injectée dans les corps creux formés entre les planchers inférieur et supérieur. Cette mousse est injectée par des orifices formés dans ou entre les planchers inférieur et supérieur. La mousse est typiquement coulée ou injectée après le passage du plancher en cataphorèse, ce qui est particulièrement avantageux. En effet, quand l'insonorisant est placé dans les corps creux avant passage en cataphorèse, ces corps creux doivent être complètement étanches pour que l'insonorisant ne soit pas endommagé dans les bains de cataphorèse. Ceci crée plusieurs difficultés :
- le plancher se comporte comme une bouée et est difficile à immerger entièrement dans les bains ;
- il peut se produire un gonflement des corps creux étanches et une déformation du plancher lors de la cuisson, sous l'effet de l'augmentation de température ;
- en cas de fuite, le liquide de cataphorèse est piégé à l'intérieur des corps creux.

Ces difficultés sont évitées si l'insonorisant est une mousse coulée ou injectée après la cataphorèse, puisque les corps creux ne sont pas étanches lors de la cataphorèse.

La lame d'air est une couche couvrant typiquement toute la couche d'insonorisant, c'est-à-dire 100% de la surface de la couche d'insonorisant.

Généralement, la couche d'insonorisant est plaquée contre le plancher inférieur, la lame d'air étant interposée entre la couche d'insonorisant et le plancher supérieur. En variante, la couche d'insonorisant est plaquée sous le plancher supérieur, la lame d'air étant interposée entre la couche d'insonorisant et le plancher inférieur. Dans cette configuration la couche d'insonorisant est collée au plancher supérieur. Selon une autre variante, le plancher comprend à l'intérieur du corps creux une lame d'air interposée entre la couche d'insonorisant et la plancher supérieur, et une autre lame d'air interposée entre la couche d'insonorisant et le plancher inférieur. La couche d'insonorisant est ainsi en sandwich entre deux lames d'air. Ceci permet d'améliorer encore plus l'insonorisation procurée par le plancher. La couche d'insonorisant est maintenue en place par des reliefs formés sur la couche d'insonorisant et assurant le contact et l'écartement avec le plancher inférieur, et éventuellement aussi avec le plancher supérieur. Alternativement, des plots ou des entretoises sont interposés entre la couche d'insonorisant et le plancher inférieur, et éventuellement aussi entre la couche d'insonorisant et le plancher supérieur. Selon une autre alternative, des reliefs (par exemple des nervures) sont formés dans le plancher inférieur, et éventuellement aussi dans le plancher supérieur.

On entend ici par ligne de fixation une ligne le long de laquelle le plancher supérieur et le plancher inférieur sont fixés l'un à l'autre, directement ou par l'intermédiaire de pièces complémentaires telles que des profilés de rigidification ou des longerons du châssis du véhicule. Les planchers inférieur et supérieur sont rigidement fixés l'un à l'autre le long de la ligne de fixation, de manière continue, par exemple par l'intermédiaire d'une colle, et/ou de manière discontinue par l'intermédiaire d'une pluralité d'organes de fixation répartis le long de la ligne de fixation et/ou par une ligne de soudage continue ou discontinue, par exemple une ligne de soudage ultrasons, ou une ligne de soudage par laser.

Les organes de fixation sont par exemple des rivets auto-poinçonnant, des clous, ou tout autre type d'organe de fixation adapté.

Ces lignes de fixation entourent chaque corps creux, et confèrent au plancher une grande rigidité.

Selon une caractéristique avantageuse de l'invention, les planchers inférieur et supérieur sont directement liés l'un à l'autre le long d'au moins une des lignes de fixation.

Ceci permet de rigidifier le plancher, sans ajout d'éléments lourds tels que des profilés métalliques.

Le long desdites lignes de fixation, les planchers inférieur et supérieurs sont à proximité immédiate l'un de l'autre, ou sont directement en contact l'un contre l'autre. Ceci est obtenu via des aménagements de forme des planchers, par exemple en créant dans le plancher inférieur des reliefs en saillie vers le plancher supérieur, ou inversement en créant dans le plancher supérieur des reliefs en saillie vers le plancher inférieur.

Selon une caractéristique avantageuse de l'invention, le plancher comprend au moins un profilé de rigidification disposé dans le corps creux.

Le plancher comporte généralement plusieurs profilés de rigidification, répartis en différents points du plancher.

Selon une caractéristique avantageuse de l'invention, le profilé de rigidification est en un métal ou en un matériau composite. Par exemple il est en aluminium, ou en magnésium, ou en acier, ou en tout autre métal adapté. Quand le profilé est en un matériau composite, il est typiquement pultrudé. En variante, les profilés sont thermoformés avec surmoulage, moulés, ou fabriqués par procédé RTM ou SMC ...

Le profilé présente une section carrée, ou une section rectangulaire ou une section en U, ou une section en oméga, ou toute autre section adaptée.

Selon une caractéristique avantageuse de l'invention, les profilés de rigidification s'étendent principalement dans les directions longitudinales et/ou transversales, sur la plus grande partie d'une longueur longitudinale et/ou d'une largeur transversale du plancher. Ceci permet en particulier de transmettre les efforts longitudinaux liés aux chocs frontaux et les efforts transversaux liés aux chocs latéraux et choc poteau.

Les directions longitudinale et transversale, l'avant, l'arrière, la droite et la gauche sont ici entendus relativement au sens de déplacement normal du véhicule.

Selon une caractéristique avantageuse de l'invention, le profilé de rigidification est rigidement fixé au plancher supérieur et au plancher inférieur. La rigidité du plancher est ainsi augmentée. Le profilé de rigidification est fixé par une colle et/ou par une ligne de soudage et/ou par des organes de fixation tels que ceux décrits plus haut.

Selon une autre caractéristique avantageuse de l'invention, le plancher comprend une couche de moquette ou un tapis, couvrant le plancher supérieur. La moquette ou le tapis constitue une couche d'insonorisant supplémentaire. Elle améliore également l'aspect du plancher.

Selon une autre caractéristique avantageuse de l'invention, le plancher inférieur comprend deux zones latérales et une zone centrale en saillie vers le plancher supérieur par rapport aux deux zones latérales, la zone centrale étant interposée longitudinalement entre les deux zones latérales et raccordant les deux zones latérales l'une à l'autre, la zone centrale délimitant un tunnel longitudinal.

Ce tunnel longitudinal permet le passage d'organes fonctionnels du véhicule, par exemple la ligne d'échappement ou encore un arbre de transmission du couple moteur aux roues arrière du véhicule. Il permet également la transmission d'effort lors de chocs.

Dans un exemple de réalisation, le plancher supérieur comporte deux parties latérales, disposées de part et d'autre de la zone centrale en saillie du plancher inférieur, et non directement raccordées l'une à l'autre.

Selon un autre exemple de réalisation, le plancher supérieur présente une forme similaire à celle du plancher inférieur, avec deux parties latérales et une partie centrale en saillie, raccordant les deux parties latérales l'une à l'autre. La partie centrale en saillie coiffe la zone centrale en saillie du plancher inférieur. Typiquement, elle est plaquée sur au moins une partie de sa surface contre la zone centrale en saillie du plancher inférieur.

Selon une autre caractéristique avantageuse de l'invention, une ou plusieurs des lignes de fixation définissent ensemble un contour fermé, délimitant ainsi un ou plusieurs corps creux fermés.

Une telle structure en caisson permet d'obtenir une rigidité extrêmement élevée du plancher, supérieure à celle d'un plancher en tôle d'acier emboutie. En conséquence, il est possible de diminuer la rigidité du reste de la structure métallique du véhicule, ce qui diminue la masse totale du véhicule.

La plancher typiquement comprend encore d'autres corps creux fermés, qui sont partiellement délimités par des lignes de fixation et partiellement délimités par d'autres structures du véhicule : longerons, traverses de châssis, etc..

Selon autre caractéristique avantageuse de l'invention, les lignes de fixation sont étanches aux liquides , notamment à l'eau, et aux fluides divers.

Ceci permet d'éviter qu'il se forme des rétentions d'eau dans le ou les corps creux, et ainsi réduit les risques de dégradation de l'insonorisant.

Selon une variante de réalisation avantageuse, certains corps creux ne sont pas entièrement fermés, mais au contraire sont ouverts à leurs deux extrémités longitudinales opposées. Ces corps creux définissent ainsi des passages pour des servitudes techniques mises en place par enfilage, tels que des câblages, des circuits de freinage, de carburant, de refroidissement, de climatisation, ... Ces passages s'étendent de préférence sur toute la longueur du plancher.

Typiquement, la couche d'insonorisant présente une épaisseur comprise entre 5 et 20 mm. De préférence cette épaisseur est comprise entre 7 et 15 mm.

Typiquement, la lame d'air présente une épaisseur comprise entre 5 et 50 mm. De préférence cette épaisseur est comprise entre 10 et 30 mm. Elle est modulable en fonction de l'encombrement du plancher est de l'épaisseur de l'insonorisant.

De telles épaisseurs permettent d'obtenir une atténuation sonore très efficace à travers le plancher.

Selon un autre aspect, l'invention porte sur un véhicule comprenant :
- un châssis ;
- un plancher ayant les caractéristiques ci-dessus, rigidement fixé au châssis.

Le véhicule est typiquement un véhicule automobile, par exemple une voiture, ou un utilitaire, ou un camion.

Le plancher comprend typiquement un plancher avant et un plancher de coffre.

Le plancher avant s'étend typiquement entre le tablier du véhicule et la traverse transversale dite «pare close». Le tablier est une cloison séparant le compartiment moteur du véhicule de l'habitacle. La traverse transversale (pare close) est située à la limite entre un plancher avant, ici décrit, et le plancher de coffre intégrant les sièges rang 2 ainsi que le coffre du véhicule. Elle raccorde le plancher avant au plancher de coffre. Le plancher avant est rigidement fixé non seulement aux longerons longitudinaux du véhicule, mais également au tablier et à la traverse transversale dite «pare close».

Les longerons du véhicule peuvent être utilisés pour fermer certains corps creux du plancher.

Le plancher avant et le plancher de coffre de préférence présentent la structure décrite plus haut. En variante, seul le plancher avant ou seul le plancher de coffre présente la structure décrite plus haut.

Selon un aspect avantageux de l'invention, le plancher comprend des organes de renforts disposés dans le corps creux, le véhicule comportant des sièges directement fixés aux organes de renfort.

On entend par là que les sièges ne sont pas liés aux organes de renfort par l'intermédiaire du plancher supérieur, ou du plancher inférieur. Au contraire, des organes tels que des tirants ou des vis ou tout autre organe de fixation raccordent directement le siège aux organes de renfort à travers le plancher supérieur.

Dans un exemple de réalisation, les sièges sont rigidement fixés directement à un profilé de rigidification du plancher, du type décrit plus haut. En variante, le plancher comprend entre le plancher supérieur et le plancher inférieur des organes de renfort spécifiquement dédiés à la fixation des sièges du véhicule. Ces organes de renfort sont distincts du ou des profilés de rigidification. Ces organes ont par exemple la forme de plots. Plus précisément, ils ont la forme de bols, de concavités tournées vers le plancher inférieur. Le bord libre du bol se prolonge vers l'extérieur du bol par un bord tombé périphérique, plaqué contre le plancher inférieur. Le bord tombé périphérique est rigidement fixé sur le plancher inférieur par un ou plusieurs des moyens évoqués ci-dessus.

Les organes de renfort peuvent avoir d'autres formes : cylindrique, tronconique, etc.. Les organes de renfort sont métalliques ou sont en un matériau composite.

Selon un autre aspect, l'invention porte sur un procédé de fabrication d'un plancher ayant les caractéristiques ci-dessus, le procédé comprenant les étapes suivantes :
- se procurer au moins deux pièces en matériau composite thermoplastique ;
- former les planchers supérieur et inférieur par estampage à chaud des deux pièces.

Ceci permet d'obtenir des temps de cycle courts, de l'ordre de la minute pour l'estampage des planchers supérieur et inférieur. Les temps de cycle pour les matériaux composites thermodurcissables sont beaucoup plus longs, de l'ordre de plusieurs minutes. Ils dépendent du temps de polymérisation des résines.

Les matériaux composites thermoplastiques utilisés sont du type décrit plus haut.

Selon un autre aspect, l'invention porte sur un procédé de fabrication d'un véhicule, le procédé comprenant les étapes suivantes :
- se procurer un plancher ayant les caractéristiques ci-dessus ;
- coller le plancher sur une structure métallique du véhicule ;
- passer la structure métallique et le plancher en cataphorèse, un produit anticorrosion étant d'abord déposé sur la structure métallique, puis la structure métallique et le plancher étant soumis à une opération de cuisson, la colle étant polymérisée pendant la cuisson.

Le plancher et la structure métallique forment la caisse en blanc du véhicule. L'étape de cataphorèse vise à déposer un produit anti-corrosion sur les parties métalliques de cette caisse en blanc. Elle comporte typiquement une sous-étape au cours de laquelle la caisse en blanc passe dans un bain de cataphorèse, le produit anti-corrosion étant déposé de façon électrostatique sur les parties métalliques, suivie d'une sous-étape de cuisson du produit anti-corrosion en étuve. Avantageusement, on profite de la sous-étape de cuisson intégrée dans le traitement par cataphorèse pour polymériser la colle.

Selon un aspect avantageux de l'invention, le procédé comprend en outre les étapes suivantes :
- surmouler au moins une pièce métallique de pré maintien sur le plancher ;
- entre l'étape de collage et l'opération de cuisson, bloquer le plancher en position par rapport à la structure métallique à l'aide de la ou chaque pièce de pré maintien, la ou chaque pièce de pré maintien étant rigidement fixée à la structure métallique.

L'assemblage d'un plancher composite sur la structure du véhicule est particulièrement délicate, puisqu'il faut fixer un composite, typiquement un composite thermoplastique, à une structure métallique.

Le collage permet une liaison très forte, mais il est nécessaire de maintenir le plancher en position par rapport à la structure métallique du véhicule au moins jusqu'à la polymérisation de la colle.

La ou les pièces de pré maintien permettent un tel blocage en position. L'étape de surmoulage permet de fixer la ou les pièces de pré maintien sur le plancher. Le surmoulage est un procédé bien adapté à la fixation d'une pièce métallique sur un plancher composite. La pièce de pré maintien est noyée dans une structure composite de même nature que le plancher. Elle est ensuite fixée à la structure métallique par tous moyens adaptés à une fixation métal sur métal : soudure résistive par points, par lignes, rivets, boulons, etc.

Après polymérisation de la colle, la ou les pièces de pré maintien contribuent à la fixation du plancher sur la structure métallique, en complément de la colle.

En variante, la ou les pièces de pré maintien ne sont pas surmoulées sur les planchers inférieur ou supérieur, elles sont assemblées par un moyen adapté (collage, ...)

En variante, la ou les pièces de pré maintien ne sont pas des pièces métalliques. Ce sont des clips en un matériau thermoplastique, surmoulés sur les planchers inférieur ou supérieur. Ces clips coopèrent avec des pièces complémentaires formées sur la structure métallique du véhicule.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique simplifiée d'un véhicule automobile comportant un plancher selon l'invention ;
- la figure 2 est une coupe longitudinale du plancher de la figure 1 ;
- la figure -3 est une coupe transversale d'une moitié du plancher de la figure 2 ;
- la figure 4 est une coupe transversale d'un plancher intégrant des variantes de réalisation de l'invention ;
- la figure 5 est une vue en coupe de la fixation du plancher de la figure 2 sur un longeron du véhicule ; cet élément de longeron est désigné par le terme « doublure de bavolet » ;
- la figure 6 est un diagramme d'étape illustrant le procédé de fabrication de l'invention ;
- la figure 7 représente l'atténuation acoustique en fonction de la fréquence, pour différents planchers de l'état de la technique ;
- la figure 8 est une représentation graphique similaire à celle de la figure 7, pour différents planchers de l'état de la technique et pour un plancher conforme à l'invention et
- les figures 9 et 10 illustrent des variantes de réalisation de l'invention.

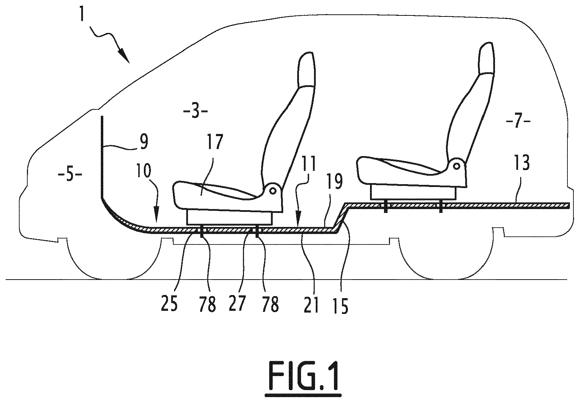

Le véhicule 1 représenté sur la figure 1 comporte une carrosserie délimitant dans le véhicule un habitacle 3, un compartiment moteur 5 situé à l'avant de l'habitacle, et un coffre 7 situé à l'arrière de l'habitacle. Le compartiment moteur 5 est séparé de l'habitacle par un tablier 9. L'habitacle est délimité vers le bas par un plancher 10.

La partie avant de l'habitacle est la zone d'occupation des passagers avant d'un véhicule automobile. Elle est délimitée à l'avant par le tablier 9 et à l'arrière par une paroi transversale appelée « pare close » 15.

Enfin cette partie avant est délimitée vers le bas par une zone du plancher 10 appelée plancher avant 11.

La partie arrière de l'habitacle s'étend de la base de la pare close (liaison entre le plancher avant 11 et la pare close 15) à l'avant jusqu'à la traverse arrière du véhicule (traverse non représentée). Cette partie arrière intègre les sièges des occupants de rang 2 et le coffre. En variante, elle intègre des sièges de rang 3.

Cette partie arrière est délimitée vers le bas par une zone du plancher 10 appelée plancher de coffre 13, légèrement surélevée par rapport au plancher avant 11. Le plancher avant 11 et le plancher de coffre 13 sont raccordés l'un à l'autre à la jonction entre la pare close 15 et le plancher avant 11.

Le véhicule comporte encore des sièges 17, rigidement fixés au plancher avant 11 par des moyens qui seront décrits plus loin.

Sur la figure 1, un siège de la première rangée est représenté ainsi qu'un siège de la seconde rangée.

Le plancher avant 11 du véhicule s'étend depuis le tablier 9 jusqu'à la base de la pare close 15 suivant une direction longitudinale, et s'étend transversalement sensiblement sur toute la largeur du véhicule. Il est rigidement fixé vers l'avant au tablier 9 et/ou à toute autre pièce transversale structurelle présente dans la zone, vers l'arrière à la pare close 15 et latéralement sur le châssis (non représenté) du véhicule, et plus précisément sur les longerons. Cet élément de longeron est désigné par le terme « doublure de bavolet ».

La structure du plancher avant 11 va maintenant être décrite. Le plancher de coffre 13 présente la même structure dans l'exemple considéré, et ne sera donc pas décrit en détails.

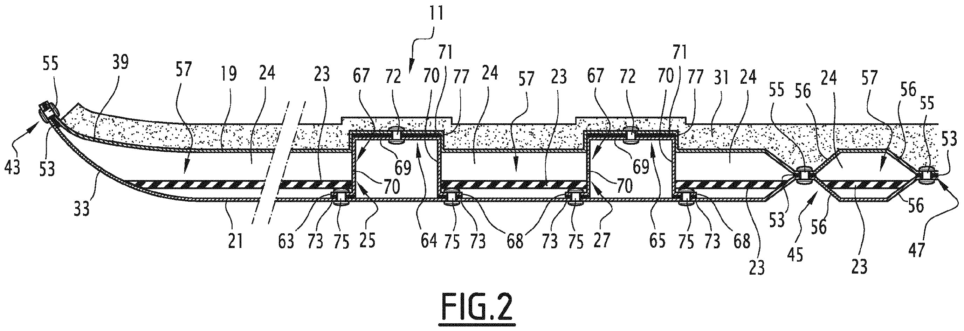

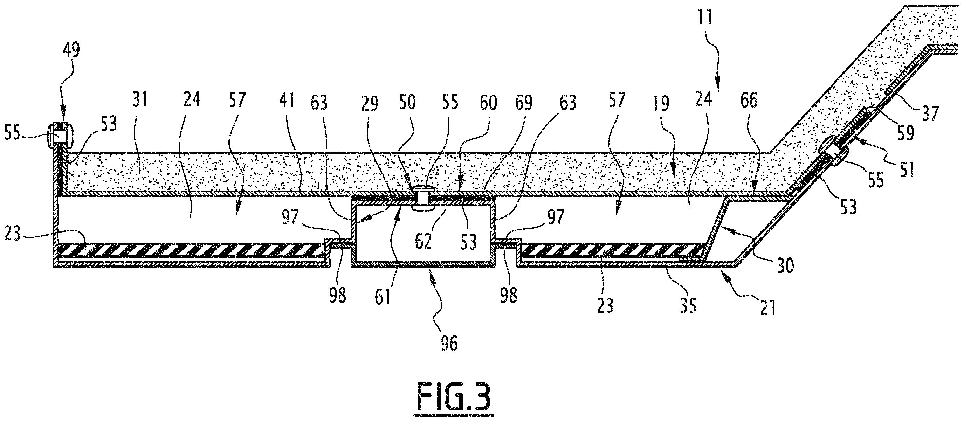

Comme visible sur les figures 2 et 3, le plancher 11 comprend :
- un plancher supérieur 19 en un matériau composite ;
- un plancher inférieur 21 en un matériau composite, s'étendant en regard d'au moins une partie du plancher supérieur ;
- une couche d'insonorisant 23 interposée entre les planchers supérieur et inférieur 19 et 21 ;
- une lame d'air 24, superposée à la couche d'insonorisant 23.

Dans l'exemple représenté, le plancher 11 comporte en outre :
- une pluralité de profilés de rigidification 25, 27, 29, 30 interposés entre les planchers supérieur et inférieur 19, 21 ; et
- une couche de moquette (tapis d'insonorisation) 31, de préférence, recouvrant le plancher supérieur 19.

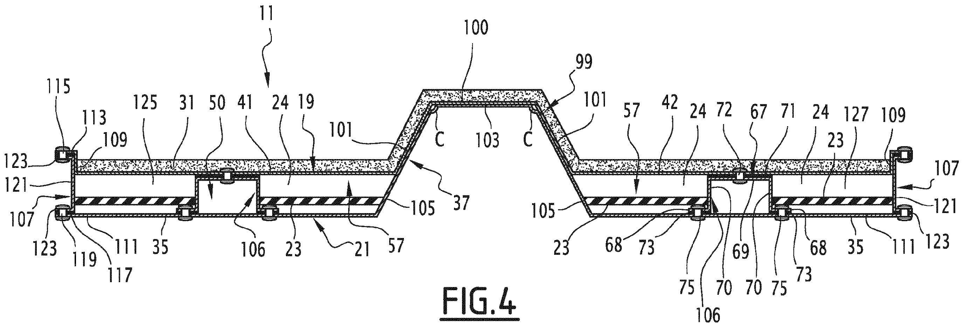

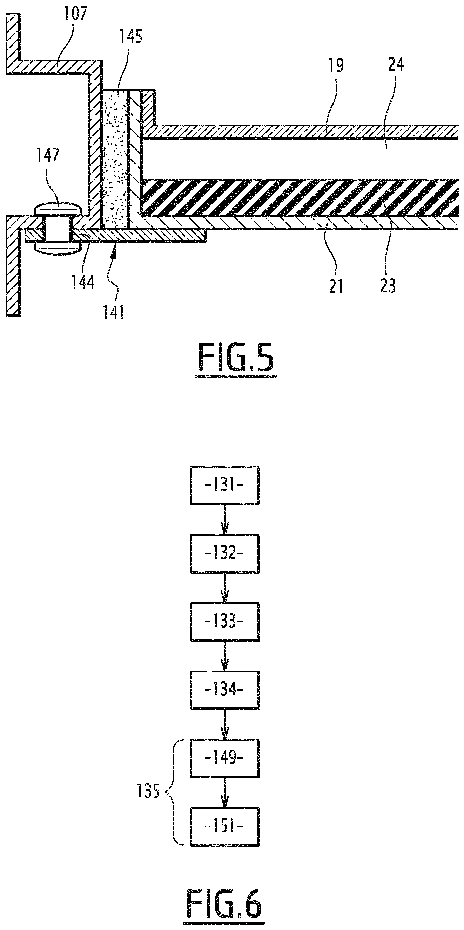

Le plancher inférieur 21 est tourné vers la surface de roulement du véhicule. Il définit une surface externe du véhicule, exposée à l'atmosphère. Vers l'avant du véhicule, il présente un bord 33 légèrement courbe, qui se relève longitudinalement d'arrière en avant et est rigidement fixé au tablier 9 du véhicule (ou à toute pièce transversale de structure présente dans la zone). Comme visible sur les figures 4 et 5, le plancher inférieur 21 comporte deux zones latérales 35, situées à gauche et à droite du plancher, et une zone centrale 37 en saillie vers le plancher supérieur par rapport aux deux zones latérales 35. Les zones latérales 35 et la zone centrale 37 s'étendent sensiblement sur toute la longueur longitudinale du plancher. La zone centrale 37 raccorde les deux zones latérales 35 l'une à l'autre, et ce sur toute la longueur du plancher. Comme visible sur la figure 4, la zone centrale 37 délimite un tunnel, ouvert à l'opposé du plancher supérieur 19, prévu pour faire passer des organes mécaniques du véhicule et jouant le rôle de renfort en choc frontal.

Le plancher supérieur 19 s'étend longitudinalement sur sensiblement la même longueur que le plancher inférieur. Il présente lui aussi vers l'avant un bord relevé 39, plaqué contre le bord relevé 33 du plancher inférieur (figure 2).

Comme visible sur la figure 4, le plancher supérieur présente deux parties latérales 41 et 42 disposées de part et d'autre de la zone centrale 37 du plancher inférieur, et séparées l'une de l'autre par cette zone centrale.

Les planchers inférieur et supérieur 19 et 21 sont fixés l'un à l'autre le long d'une pluralité de lignes de fixation.

Le long des lignes de fixation 43, 45, 47, 49, 50 et 51, les planchers inférieur et supérieur 19, 21 sont directement fixés l'un à l'autre. Le long desdites lignes de fixation, les planchers supérieur et inférieur 19 et 21 sont plaqués l'un contre l'autre, avec éventuellement interposition d'une couche de colle 53. Les planchers supérieur et inférieur 19 et 21 sont plaqués l'un contre l'autre sur toute ou partie de la longueur desdites lignes. Ils sont de préférence rigidement fixés l'un à l'autre, en plus de l'éventuelle couche de colle 53, par une pluralité d'organes de fixation 55, des rivets auto perçants dans l'exemple représenté, et/ou par une ligne de soudage continue ou discontinue. Ces organes de fixation sont régulièrement répartis le long des lignes de fixation 43, 45, 47, 49, 50 et 51. Seules six lignes de fixation sont représentées sur les figures, mais en variante le plancher présente d'autres lignes de fixation non représentées.

Comme visible sur la figure 2, la ligne de fixation 43 fixe les bords avant 33 et 39 respectivement du plancher inférieur et du plancher supérieur l'un à l'autre. Les lignes de fixation 45 et 47 fixent chacune un relief 56 ménagé dans le plancher supérieur à un autre relief 56 ménagé dans le plancher inférieur. Les reliefs 56 sont des dépressions d'orientations transversales, convexes l'une vers l'autre. Comme visible sur la figure 3, la ligne de fixation 49 fixe les bords latéraux gauche des planchers supérieur et inférieur l'un à l'autre. Les bords latéraux droits des deux planchers sont fixés de la même façon. La ligne de fixation 51 fixe un bord central 59 de la partie 41 du plancher supérieur 19 à la zone centrale 37 du plancher inférieur. Le bord central 59 s'étend longitudinalement et délimite la partie 41 du plancher supérieur vers le centre du véhicule, c'est-à-dire du côté de la zone centrale 37. La partie 42 est fixée de la même façon à la zone centrale 37.

La ligne de fixation 50 fixe une bande intermédiaire 60 du plancher supérieur 19 à un relief 61 ménagé dans le plancher inférieur 21. Le relief 61 fait saillie vers le plancher supérieur 19. La bande intermédiaire 60 et le relief 61 s'étendent longitudinalement sur la plus grande partie de la longueur du plancher. Le relief 61 a une section transversale en U, avec une partie centrale 62 fixée au plancher supérieur 19, et deux ailes latérales 63 se raccordant au reste du plancher inférieur 21.

Par ailleurs, les planchers inférieur et supérieur 19 et 21 sont fixés l'un à l'autre par l'intermédiaire de pièces complémentaires le long des lignes de fixation 64, 65, 66.

Le long des lignes de fixation 64 et 65, les planchers inférieur et supérieur 19 et 21 sont fixés l'un à l'autre par l'intermédiaire des profilés 25 et 27. Ces profilés sont d'orientation transversale.

Dans l'exemple représenté sur les Figures 2 à 4, chaque profilé transversal 25, 27 comporte deux tronçons, situés de part et d'autre de la zone centrale 37. L'un des tronçons est interposé entre la partie 41 du plancher supérieur et le plancher inférieur, et l'autre tronçon entre la partie 42 et le plancher inférieur 21. Les deux tronçons sont disjoints. Ils sont situés dans le prolongement l'un de l'autre suivant la direction transversale.

Selon une variante de réalisation illustrée sur la figure 10, au moins un tirant T est rigidement fixé sous le plancher. Il s'étend transversalement, entre et dans le prolongement des profilés 25 ou 27. Il est rigidement fixé par ses extrémités transversales aux deux zones 35 du plancher inférieur, sa partie centrale s'étendant au-dessus de la zone centrale 37. Chaque tirant T a pour fonction de reprendre les efforts latéraux en cas de choc latéral ou de choc poteau, et de renvoyer les efforts vers le côté opposé au choc.

Comme visible sur la figure 2, chacun des profilés 25, 27 présente, en coupe transversale, une âme centrale rectangulaire 67 et deux bords rabattus deux ailes 68. L'âme centrale 67 est ouverte vers le plancher inférieur 21. Elle comporte un fond 69 plaqué contre le plancher supérieur 19, et deux parois latérales 70 opposées l'une à l'autre, solidaires du fond 69 et sensiblement perpendiculaires à celui-ci. Les bords rabattus 68 prolongent les parois latérales 70 vers l'extérieur du profilé, à l'opposé du fond 69. Elles sont plaquées contre le plancher inférieur 21. Le fond 69 du profilé est rigidement fixé au plancher supérieur 19, par exemple par une couche de colle 71 et/ou par soudure et/ou une pluralité d'organes de fixation 72, qui sont des rivets dans l'exemple représenté.

Les deux bords rabattus deux ailes 68 sont rigidement fixées au plancher inférieur 21, par une couche de colle 73, et/ou par soudure et/ou une pluralité d'organes de fixation 75, qui sont des rivets dans l'exemple représenté.

Par exemple, et comme visible sur la figure 2, une rainure 77 est formée transversalement dans le plancher supérieur 19, et délimite une concavité ouverte vers le plancher inférieur. Elle reçoit intérieurement le profilé 25, 27. Elle présente une forme sensiblement conjuguée de celle du profilé. Cette rainure 77 forme avantageusement une traverse, sur laquelle sont fixés les ancrages des sièges du véhicule. De préférence, cette traverse est prévue pour reprendre des efforts engendrés par un choc latéral sur le véhicule. Typiquement, la rainure 77 reçoit le fond 69 du profilé, et une partie des parois latérales 70.

Le long de la ligne de fixation 66 (figure 3), les planchers inférieur et supérieur 19 et 21 sont fixés l'un à l'autre par l'intermédiaire du profilé 30, visible sur la figure 3. Ce profilé est d'orientation longitudinale.

Le plancher comporte par exemple deux profilés 30, disposés de part et d'autre de la zone centrale 37.

Le profilé 30 a une section transversale sensiblement en S, avec une aile supérieure fixée au plancher supérieur 19, une aile inférieure fixée au plancher inférieur 21, et une âme inclinée raccordant les ailes supérieure et inférieure l'une à l'autre.

Les ailes supérieure et inférieure sont fixées aux planchers supérieur et inférieur par exemple par une couche de colle et/ou par soudure et/ou une pluralité d'organes de fixation tels que des rivets, ces différents moyens n'étant pas représentés.

Les lignes de fixation 43, 45, 47, 49, 50, 51, 64, 65, 66 définissent ensemble un ou plusieurs contours fermés. Ces contours fermés délimitent ainsi des corps creux fermés 57, ménagés entre le plancher supérieur et le plancher inférieur. La présence des corps creux fermés 57, et des lignes de fixation, confère une grande rigidité au plancher.

Les sièges 17 de la première rangée de sièges de véhicules sont fixés aux profilés 25 et 27 par l'intermédiaire de tirants 78 représentés schématiquement sur la figure 1. Les tirants 78 traversent la moquette 31 et le plancher supérieur 19, et sont en prise avec les profilés 25 et 27.

Selon une variante de réalisation, le plancher comprend en outre au moins un profilé de rigidification 96, placé en dehors des corps creux 57. Dans l'exemple représenté sur la figure 3, le plancher comporte deux profilés longitudinaux 96, situés de part et d'autre de la zone centrale 37.

Chaque profilé 96 est fixé sous le plancher inférieur 21, au droit du relief 61. Comme visible sur la figure 3, les ailes latérales 63 du relief 61 présentent chacune un épaulement longitudinal 97. Le profilé 96 a une forme en Ω, ses deux bords rabattus 98 étant rigidement fixées aux deux épaulements 97. Le profilé 96 est concave vers le relief 61. Le relief 61 et le profilé 96 forment ensemble une poutre creuse à section fermée, particulièrement rigide.

Selon une variante de réalisation représentée sur la figure 4, le plancher supérieur 19 comporte, en plus des deux parties latérales 41 et 42, une partie centrale 99, raccordant les parties latérales 41 et 42 l'une à l'autre. La partie centrale 99 fait saillie à l'opposé du plancher inférieur 21 par rapport aux parties latérales 41 et 42. Elle forme ainsi une bosse de forme allongée longitudinalement, s'étendant sur pratiquement toute la longueur du plancher 1. La partie centrale 99 coiffe la zone centrale 37, et repose sur cette zone centrale.

Plus précisément, la partie centrale présente un sommet aplati 100 et deux flancs 101, raccordant le sommet aplati 100 aux parties latérales 41 et 42. La zone centrale 37 du plancher inférieur présente une forme similaire, avec également un sommet aplati 103 et deux flancs 105 raccordant le sommet aplati 103 aux zones latérales 35. Le sommet aplati 100 repose contre le sommet 103. Il est fixé à celui-ci par une couche de colle et/ou par soudage, par exemple par soudage à ultrasons ou laser et/ou par des organes de fixation mécaniques tels que des rivets.

Les flancs 101 sont parallèles aux flancs 105 et reposent contre ceux-ci. Chaque flanc 101 est fixé au flanc 105 correspondant par une couche de colle et/ou par soudage, par exemple par soudage à ultrasons ou laser et/ou par des organes de fixation mécaniques tels que des rivets.

La couche de moquette (le tapis) 31 recouvre la partie centrale 99.

Dans l'exemple de réalisation illustré sur la figure 4, le zone centrale 37 du plancher inférieur présente deux zones en creux C, s'étendant longitudinalement sur toute la longueur du plancher de préférence. Ces zones en creux C sont concaves vers le plancher supérieur 19. Elles sont par exemple situées au niveau des jonctions entre le sommet aplati 103 et les flancs 105. Elles définissent avec le plancher supérieur chacune un corps creux fermé, augmentant la rigidité du plancher en partie haute du tunnel..

Selon une variante de réalisation représentée sur la figure 4, le relief 61 et le profilé 96 sont remplacés par un profilé longitudinal 106. Le profilé 106 présente sensiblement la même forme que les profilés 25 et 27. Il est placé entre le plancher inférieur 21 et le plancher supérieur 19. Il est fixé au plancher inférieur 21 et au plancher supérieur 19 comme les profilés 25 et 27.

Par ailleurs, des doublures de bavolet 107 du châssis du véhicule sont représentés sur les figures 4 et 5 Ces doublures de bavolet 107 s'étendent longitudinalement, l'un à droite et l'autre à gauche du véhicule. Ils font partie du châssis du véhicule.

Selon une variante de réalisation, les bords extérieurs respectifs 109 et 111 des planchers supérieur et inférieur ne sont pas fixés l'un à l'autre, mais au contraire sont rigidement fixés aux doublures de bavolet 107
Plus précisément, comme représenté sur la figure 4, le plancher supérieur 19 est délimité latéralement par deux bords 109, l'un situé à gauche et l'autre situé à droite du plancher. Les bords latéraux 109 s'étendent longitudinalement sensiblement sur toute la longueur du plancher. De même, le plancher inférieur 21 est délimité latéralement par deux bords latéraux 111, situés l'un à gauche et l'autre à droite du véhicule. Les bords latéraux 111 s'étendent sur toute la longueur longitudinale du plancher.

Chacun des deux bords 109 du plancher supérieur 19 est rigidement fixé sur une doublure de bavolet 107, par exemple par une couche de colle 113 et/ou par des organes de fixation mécaniques 115 tels que rivets. De même, chacun des deux bords latéraux 111 est fixé à l'une des doublures de bavolet 107 par une couche de colle 117 et par des organes de fixation mécanique 119 tels que des rivets.

Dans l'exemple représenté, la doublure de bavolet est un profilé en C, avec une âme centrale 121 qui présente deux bords rabattus 123 . Les bords latéraux 109 et 111 des planchers inférieur et supérieur 19 et 21 sont directement fixés chacun à un bord rabattu 123. L'âme 121 est sensiblement d'orientation verticale, c'est-à-dire sensiblement perpendiculaire au plan de roulement du véhicule.

Dans cet exemple de réalisation, il existe donc au moins un corps creux fermé 125 à gauche de la zone centrale 37, et un corps creux fermé 127 à droite de la zone centrale 37 qui sont délimités chacun partiellement par une doublure de bavolet 107 Plus précisément, les corps creux 125 et 127 sont délimités vers le haut par le plancher supérieur 19 vers le bas par le plancher inférieur 21, vers l'intérieur du véhicule par le longeron 106 et vers l'extérieur du véhicule par les doublures de bavolet 107.

La couche d'insonorisant 23 s'étend dans tous les corps creux 57 125, 127. Elle couvre de préférence toute la surface du plancher inférieur 21, à l'exception des zones occupées par les profilés de rigidification 25, 27, 29, 30, 106, et de la zone centrale 37. En variante, une bande d'insonorisant est placée à l'intérieur de chaque profilé.

L'insonorisant est une mousse ou un feutre à base de fibres cellulosiques, de fibres en polyester ou de fibres en polyamide.

La lame d'air 24 est une couche couvrant toute la couche d'insonorisant 23, c'est-à-dire 100% de la surface de la couche d'insonorisant. Les profilés 25, 27, 29, 30, 106 sont également remplis d'air.

La couche d'insonorisant 23 présente en tout point une épaisseur comprise entre 5 et 20 mm. De préférence cette épaisseur est comprise entre 7 et 15 mm.

La lame d'air 24 présente en tout point une épaisseur comprise entre 5 et 50 mm. De préférence cette épaisseur est comprise entre 10 et 30 mm.

Dans la variante de réalisation illustrée sur la figure 9, le plancher 10 comporte des éléments surmoulés sur les planchers inférieur 21 et/ou supérieur 19. Ces éléments sont par exemple des nervures de rigidification 170, des goulottes de passage de câbles 171, des logements 172 destinés à loger des équipements divers (calculateurs, connecteurs ...), ou encore des clips 174 destinés à la fixation du plancher sur le véhicule. Ces éléments sont en une matière comportant typiquement une résine thermoplastique et des fibres courtes noyées dans la résine. La résine est de préférence la même que celle formant les planchers inférieur et/ou supérieur.

Le procédé de fabrication du plancher 11 ou 13 comprend de préférence les étapes suivantes :
- se procurer au moins deux pièces en matériau composite thermoplastique ;
- former les planchers supérieur et inférieur 19, 21 par estampage à chaud des deux pièces.

Le procédé d'estampage à chaud est connu en soi. Il ne sera pas décrit en détail ici. Chaque pièce est en un des matériaux thermoplastiques décrits plus haut.

L'étape d'estampage à chaud permet de donner aux planchers supérieur 19 et inférieur 21 leurs formes pratiquement définitives.

Le procédé comprend en outre les étapes suivantes :
- fixation des profilés de rigidification 25, 27, 30, 106 au plancher inférieur 21 ;
- mise en place de la couche d'insonorisant 23 sur le plancher inférieur 21 ;
- mise en place du plancher supérieur 19 ;
- fixation du plancher supérieur 19 au plancher inférieur 21, le long des lignes de fixation 43, 45, 47, 49, 50 et 51 ;
- fixation du plancher supérieur 19 aux profilés 25, 27, 30, 106 ;
- en variante , fixation du profilé 96 au plancher inférieur ;
- le cas échéant, fixation des planchers supérieur et inférieur 19, 21 aux doublures de bavolet 107.

Le cas échéant, le procédé comprend une étape de surmoulage d'éléments en matériau thermoplastique tels que les éléments 170, 171, 172, 174 sur les planchers inférieur 21 et/ou supérieur 19.

Le procédé de fabrication d'un véhicule incorporant le plancher 11 va maintenant être décrit, en référence aux figures 5 et 6.

Le procédé comprend :
- une étape 131, au cours de laquelle on se procure un plancher 10 ayant les caractéristiques ci-dessus ;
- de préférence, une étape 132 de surmoulage d'au moins une pièce métallique de pré maintien 141 sur le plancher.
- une étape 133 de collage du plancher 10 sur la structure métallique du véhicule ;
- de préférence, une étape 134 de fixation du ou de chaque pièce de pré-maintien du plancher 10 sur la structure métallique ;
- étape 135 de passage de la structure métallique et du plancher 10 en cataphorèse.

La structure métallique comprend typiquement le châssis du véhicule. Ce châssis comporte entre autres les doublures de bavolet 107. Le châssis et le plancher constituent ensemble la caisse en blanc du véhicule.

A l'étape 132, on surmoule typiquement plusieurs pièces de pré maintien 141. Les pièces 141 sont typiquement des pattes dont une partie 144 fait saillie par rapport au plancher 10..

L'étape de surmoulage 132 permet de solidariser chaque pièce de pré maintien 141 au plancher. Un tel surmoulage est connu et ne sera pas décrit en détails ici.

L'étape de collage 133 est réalisée en déposant une couche de colle 145 sur le plancher 10 et/ou sur la structure métallique, et en plaquant le plancher 10 contre la structure métallique avec interposition de la couche de colle 145. Ce mouvement permet simultanément de plaquer chaque pièce de pré maintien 141 contre la structure métallique, comme visible sur la figure 5.

A l'étape 134 chaque pièce de pré maintien 141 est fixée par soudure résistive par points, par lignes, par des rivets tels que le rivet 147 représenté sur la figure 5, par des boulons ou par toute autre méthode adaptée.

L'étape 135 de passage en cataphorèse comprend deux sous-étapes :
- sous-étape 149 : déposer d'un produit anticorrosion sur la structure métallique :
- sous-étape 151 : soumettre la structure métallique et le plancher 10 à une opération de cuisson.

Comme connu en soi, la caisse en blanc passe dans un bain de cataphorèse à la sous-étape 149, le produit anti-corrosion étant déposé de façon électrostatique sur les parties métalliques. A la sous-étape 151, le produit anti-corrosion subit une cuisson en étuve, la colle étant polymérisée pendant la cuisson. La colle ne fixe rigidement le plancher à la structure métallique qu'une fois la polymérisation effectuée.

Entre l'étape de collage 133 et l'opération de cuisson, le plancher 10 est bloqué en position par rapport à la structure métallique à l'aide de la ou des pièces de pré maintien 141.

## Revendications

1. Procédé de fabrication d'un véhicule, le procédé comprenant l'étape suivante :
- se procurer un plancher (10);
le plancher (10) comprenant :
- un plancher supérieur (19) en un matériau composite ;
- un plancher inférieur (21) en un matériau composite, s'étendant en regard d'au moins une partie du plancher supérieur (19),
- les planchers inférieur et supérieur (19, 21) étant liés l'un à l'autre le long d'au moins une ligne de fixation (43, 45, 47, 49, 50, 51, 64, 65, 66) et délimitant entre eux au moins un corps creux (57, 125, 127),
le plancher (10) comprenant entre le plancher supérieur (19) et le plancher inférieur (21), à l'intérieur du ou de chaque corps creux (57, 125, 127), une couche d'insonorisant (23) et une lame d'air superposée à la couche d'insonorisant (23) ;
**caractérisé en ce que** le procédé comprend en outre les étapes suivantes :
- coller le plancher (10) sur une structure métallique (107) du véhicule ;
- passer la structure métallique (107) et le plancher en cataphorèse, un produit anticorrosion étant d'abord déposé sur la structure métallique (107), puis la structure métallique (107) et le plancher (10) étant soumis à une opération de cuisson, la colle étant polymérisée pendant la cuisson.

2. Procédé selon la revendication 1, **caractérisé en ce que** les planchers inférieur et supérieur (19, 21) sont directement liés l'un à l'autre le long d'au moins une des lignes de fixation (43, 45, 47, 49, 50, 51).

3. Procédé selon l'une quelconque des revendications précédentes, **caractérisé en ce que** le plancher (10) comprend au moins un profilé de rigidification (25, 27, 29, 30) disposé entre les planchers supérieur et inférieur (19, 21).

4. Procédé selon la revendication 3, **caractérisé en ce que** le profilé de rigidification (25, 27, 30) est rigidement fixé au plancher supérieur (19) et/ou au plancher inférieur (21).

5. Procédé selon l'une quelconque des revendications précédentes, **caractérisé en ce que** le plancher inférieur (21) comprend deux zones latérales (35) et une zone centrale (37) en saillie vers le plancher supérieur (19) par rapport aux deux zones latérales (35), la zone centrale (37) étant interposée transversalement entre les deux zones latérales (35) et raccordant les deux zones latérales (35) l'une à l'autre, la zone centrale (37) délimitant un tunnel longitudinal.

6. Procédé selon l'une quelconque des revendications précédentes, **caractérisé en ce qu'**une ou plusieurs des lignes de fixation (43, 45, 47, 49, 50, 51, 64, 65, 66) définissent ensemble un contour fermé, délimitant ainsi un ou plusieurs corps creux fermés.

7. Procédé selon l'une quelconque des revendications précédentes, caractérisé en ce les lignes de fixation (43, 45, 47, 49, 50, 51, 64, 65, 66) sont étanches aux liquides.

8. Procédé selon l'une quelconque des revendications précédentes, **caractérisé en ce que** la couche d'insonorisant (23) présente une épaisseur comprise entre 5 et 20 mm.

9. Procédé selon l'une quelconque des revendications précédentes, **caractérisé en ce que** la lame d'air (24) présente une épaisseur comprise entre 5 et 50 mm.

10. Procédé selon l'une quelconque des revendications précédentes, le procédé comprenant les étapes suivantes :
- se procurer au moins deux pièces en matériau composite thermoplastique ;
- former les planchers supérieur et inférieur (19, 21) par estampage à chaud des deux pièces.

11. Procédé selon l'une quelconque des revendications précédentes, **caractérisé en ce que** le procédé comprend en outre les étapes suivantes :
- surmouler au moins une pièce métallique de pré maintien (141) sur le plancher (10);
- entre l'étape de collage et l'opération de cuisson, bloquer le plancher (10) en position par rapport à la structure métallique (107) à l'aide de la ou chaque pièce de pré maintien (141), la ou chaque pièce de pré maintien (141) étant rigidement fixée à la structure métallique (107).

12. Véhicule (1) obtenu selon le procédé de l'une quelconque des revendications précédentes:
- la structure métallique comprenant un châssis ;
- le plancher (10) étant rigidement fixé au châssis,le plancher (10) comprenant des organes de renforts (25, 27) disposés entre les planchers supérieur et inférieur (19, 21), le véhicule ayant des sièges (17) directement fixés aux organes de renfort (25, 27).

## Patentansprüche

1. Verfahren zur Herstellung eines Fahrzeugs, wobei das Verfahren den folgenden Schritt aufweist:
- Bereitstellen eines Fußbodens (10), wobei der Fußboden (10) aufweist:
- einen oberen Boden (19) aus einem Verbundmaterial,
- einen unteren Boden (21) aus einem Verbundmaterial, der sich zumindest gegenüber einem Teil des oberen Bodens (19) erstreckt,
- wobei der untere und der obere Boden (19, 21) miteinander verbunden sind entlang wenigstens einer Befestigungslinie (43, 45, 47, 49, 50, 51, 64, 65, 66) und zwischen sich wenigstens einen Hohlkörper (57, 125, 127) begrenzen,
wobei der Fußboden (10) zwischen dem oberen Boden (19) und dem unteren Boden (21) im Inneren des oder jedes Hohlkörpers (57, 125, 127) eine schalldämpfende Schicht (23) und einen der schalldämpfenden Schicht (23) überlagerten Luftzwischenraum aufweist,
**dadurch gekennzeichnet, dass** das Verfahren ferner die folgenden Schritte aufweist:
- Kleben des Fußbodens (10) auf eine Metallstruktur (107) des Fahrzeugs,
- Kataphorese-Behandlung der Metallstruktur (10) und des Fußbodens, wobei zunächst ein Antikorrosions-Produkt auf der Metallstruktur (107) abgelagert wird, wobei danach die Metallstruktur (107) und der Fußboden (10) einem Härtungsvorgang unterzogen werden, wobei der Kleber während des Härtens polymerisiert wird.

2. Verfahren gemäß Anspruch 1, **dadurch gekennzeichnet, dass** der untere und der obere Boden (19, 21) direkt miteinander verbunden sind entlang wenigstens einer der Befestigungslinien (43, 45, 47, 49, 50, 51).

3. Verfahren gemäß irgendeinem der vorhergehenden Ansprüche, **dadurch gekennzeichnet, dass** der Fußboden (10) aufweist wenigstens ein Versteifungsprofil (25, 27, 29, 30), das zwischen dem oberen und dem unteren Boden (19, 21) angeordnet ist.

4. Verfahren gemäß Anspruch 3, **dadurch gekennzeichnet, dass** das Versteifungsprofil (25, 27, 30) mit dem oberen Boden (19) und/oder dem unteren Boden (21) starr verbunden ist.

5. Verfahren gemäß irgendeinem der vorhergehenden Ansprüche, **dadurch gekennzeichnet, dass** der untere Boden (21) zwei laterale Bereiche (35) und einen zentralen Bereich (37) aufweist, der relativ zu den beiden lateralen Bereichen (35) zu dem oberen Boden (19) hin vorsteht, wobei der zentrale Bereich (37) transversal zwischen den beiden lateralen Bereichen (35) angeordnet ist und die beiden lateralen Bereiche (35) miteinander verbindet, wobei der zentrale Bereich (37) einen longitudinalen Tunnel begrenzt.

6. Verfahren gemäß irgendeinem der vorhergehenden Ansprüche, **dadurch gekennzeichnet, dass** eine oder mehrere der Befestigungslinien (43, 45, 47, 49, 50, 51, 64, 65, 66) zusammen eine geschlossene Kontur definieren, die gleichsam einen oder mehrere geschlossene Hohlkörper definiert.

7. Verfahren gemäß irgendeinem der vorhergehenden Ansprüche, **dadurch gekennzeichnet, dass** die Befestigungslinien (43, 45, 47, 49, 50, 51, 64, 65, 66) flüssigkeitsdicht sind.

8. Verfahren gemäß irgendeinem der vorhergehenden Ansprüche, **dadurch gekennzeichnet, dass** die schalldämpfende Schicht (23) eine Dicke hat, die zwischen 5 und 20 mm liegt.

9. Verfahren gemäß irgendeinem der vorhergehenden Ansprüche, **dadurch gekennzeichnet, dass** der Luftzwischenraum (24) eine Dicke hat, die zwischen 5 und 50 mm liegt.

10. Verfahren gemäß irgendeinem der vorhergehenden Ansprüche, wobei das Verfahren die folgenden Schritte aufweist:
- Bereitstellen wenigstens zweier Teile aus einem thermoplastischen Verbundmaterial,
- Bilden des oberen und des unteren Bodens (19, 21) durch Warmpressen der beiden Teile.

11. Verfahren gemäß irgendeinem der vorhergehenden Ansprüche, **dadurch gekennzeichnet, dass** das Verfahren ferner die folgenden Schritte aufweist:
- Anformen wenigstens eines metallischen Teils zur Vorab-Aufrechterhaltung (141) an dem Fußboden (10),
- zwischen dem Schritt des Klebens und dem Härtungsvorgang, Blockieren des Fußbodens (10) in Position relativ zu der Metallstruktur (107) mit Hilfe des oder jedes Teils zur Vorab-Aufrechterhaltung (141), wobei das oder jedes Teil zur Vorab-Aufrechterhaltung (141) an der Metallstruktur (107) starr befestigt ist.

12. Fahrzeug (1), das erhalten ist gemäß dem Verfahren irgendeines der vorhergehenden Ansprüche:
- wobei die Metallstruktur ein Chassis aufweist,
- wobei der Fußboden (10) mit dem Chassis starr verbunden ist, wobei der Fußboden (10) Verstärkungsorgane (25, 27) aufweist, die zwischen dem oberen und dem unteren Boden (19, 21) angeordnet sind, wobei das Fahrzeug Sitze (17) hat, die direkt an den Verstärkungsorganen (25, 27) befestigt sind.

## Claims

1. Method for manufacturing a vehicle, the method comprising the following step:
- acquiring a floor (10);
the floor (10) comprising:
- an upper floor (19) made of a composite material;
- a lower floor (21) made of a composite material and extending opposite at least a portion of the upper floor (19),
- the upper and lower floors (19, 21) being joined to one another along at least one fixing line (43, 45, 47, 49, 50, 51, 64, 65, 66) and delimiting between them at least one hollow body (57, 125, 127),
the floor (10) comprising, between the upper floor (19) and the lower floor (21), inside the or each hollow body (57, 125, 127), a sound-proofing layer (23) and an air gap superposed on the sound-proofing layer (23);
**characterised in that** the method further comprises the following steps:
- adhesively bonding the floor (10) to a metal structure (107) of the vehicle;
- passing the metal structure (107) and the floor through cataphoresis, an anti-corrosion product first being deposited on the metal structure (107), and the metal structure (107) and the floor (10) then being subjected to a firing operation, the adhesive being polymerised during firing.

2. Method according to claim 1, **characterised in that** the lower and upper floors (19, 21) are joined to one another directly along at least one of the fixing lines (43, 45, 47, 49, 50, 51).

3. Method according to any one of the preceding claims, **characterised in that** the floor (10) comprises at least one stiffening profile (25, 27, 29, 30) arranged between the upper and lower floors (19, 21).

4. Method according to claim 3, **characterised in that** the stiffening profile (25, 27, 30) is rigidly fixed to the upper floor (19) and/or to the lower floor (21).

5. Method according to any one of the preceding claims, **characterised in that** the lower floor (21) comprises two lateral zones (35) and a central zone (37) which projects towards the upper floor (19) relative to the two lateral zones (35), the central zone (37) being interposed transversely between the two lateral zones (35) and connecting the two lateral zones (35) to one another, the central zone (37) delimiting a longitudinal tunnel.

6. Method according to any one of the preceding claims, **characterised in that** one or more of the fixing lines (43, 45, 47, 49, 50, 51, 64, 65, 66) together define a closed contour, thus delimiting one or more closed hollow bodies.

7. Method according to any one of the preceding claims, **characterised in that** the fixing lines (43, 45, 47, 49, 50, 51, 64, 65, 66) are liquid-tight.

8. Method according to any one of the preceding claims, **characterised in that** the sound-proofing layer (23) has a thickness of between 5 and 20 mm.

9. Method according to any one of the preceding claims, **characterised in that** the air gap (24) has a thickness of between 5 and 50 mm.

10. Method according to any one of the preceding claims, the method comprising the following steps:
- acquiring at least two parts made of thermoplastic composite material;
- forming the upper and lower floors (19, 21) by hot stamping the two parts.

11. Method according to any one of the preceding claims, **characterised in that** the method further comprises the following steps:
- overmoulding at least one metal preliminary holding part (141) on the floor (10);
- between the adhesive bonding step and the firing operation, fixing the floor (10) in position relative to the metal structure (107) by means of the or each preliminary holding part (141), the or each preliminary holding part (141) being rigidly fixed to the metal structure (107).

12. Vehicle (1) obtained by the method according to any one of the preceding claims:
- the metal structure comprising a chassis;
- the floor (10) being rigidly fixed to the chassis, the floor (10) comprising reinforcing members (25, 27) arranged between the upper and lower floors (19, 21), the vehicle having seats (17) fixed directly to the reinforcing members (25, 27).
